(19) **Europäisches Patentamt**
**European Patent Office**
**Office européen des brevets**

(11) **EP 1 751 513 B1**

(12) **FASCICULE DE BREVET EUROPEEN**

(45) Date de publication et mention
de la délivrance du brevet:
**05.12.2012 Bulletin 2012/49**

(51) Int Cl.:
***G01L 5/24*** *(2006.01)*

(21) Numéro de dépôt: **05773199.4**

(86) Numéro de dépôt international:
**PCT/FR2005/001292**

(22) Date de dépôt: **25.05.2005**

(87) Numéro de publication internationale:
**WO 2006/000677 (05.01.2006 Gazette 2006/01)**

(54) **PROCEDE DE CONTROLE DE LA MISE SOUS TENSION D'UNE TIGE DE BOULON, DU TYPE VIS OU GOUJON D'ASSEMBLAGE, ET DISPOSITIF DE MISE EN OEUVRE D'UN TEL PROCEDE**

VERFAHREN ZUR KONTROLLE DER ZUGSPANNUNG EINES BOLZENSCHAFTES WIE ETWA EINER SCHRAUBE ODER EINES SPANNSTIFTES SOWIE VERFAHREN ZUR DURCHFÜHRUNG DIESES VERFAHRENS

METHOD FOR CONTROLLING TENSILE STRESS OF A BOLT SHANK SUCH AS A SCREW OR DOWEL PIN AND DEVICE FOR CARRYING OUT SAID METHOD

(84) Etats contractants désignés:
**AT BE BG CH CY CZ DE DK EE ES FI FR GB GR HU IE IS IT LI LT LU MC NL PL PT RO SE SI SK TR**

(30) Priorité: **02.06.2004 FR 0405952**

(43) Date de publication de la demande:
**14.02.2007 Bulletin 2007/07**

(73) Titulaire: **Aktiebolaget SKF**
**415 50 Göteborg (SE)**

(72) Inventeur: **MONVILLE, Jean-Michel**
**F-78690 Les Essarts Le Roi (FR)**

(74) Mandataire: **Casalonga, Axel**
**Casalonga & Partners**
**Bayerstrasse 73**
**80335 München (DE)**

(56) Documents cités:
**FR-A- 2 580 742 FR-A- 2 586 098**
**US-A- 4 333 351 US-B1- 6 167 764**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine du serrage de boulons par précontrainte à froid, et en particulier un procédé de contrôle de la mise sous tension d'une tige de boulon, du type vis ou goujon, afin de vérifier si la tige est suffisamment précontrainte à l'issue du serrage. L'invention concerne également un dispositif pour la mise en oeuvre d'un tel procédé.

L'énergie de déformation du boulon est transférée à l'écrou en appui sur la structure à assembler. Les pièces sont ainsi maintenues avec un serrage.

Des boulons, comprenant une tige, du type vis ou goujon, et un ou plusieurs écrous, sont utilisés pour assembler avec un serrage plusieurs pièces d'une structure. Il est connu pour obtenir un serrage de qualité de réaliser un serrage par précontrainte de traction dans lequel on procède à une extension d'une tige de serrage à l'aide d'un actionneur, par exemple un vérin hydraulique, puis on accoste un écrou de serrage sans exercer un couple important sur une face de la structure à assembler, et ensuite on relâche l'effort d'extension sur la tige. La tige relâchée tend à récupérer sa longueur au repos, mais est bloquée par l'écrou. L'énergie de déformation imposée à la tige pendant l'étape d'extension est transférée à l'ensemble tige-écrou en appui sur la structure à assembler. Les pièces sont ainsi maintenues avec un serrage ou précontrainte.

Un tel procédé évite de serrer un écrou en lui appliquant un couple de vissage. Ceci procure une meilleure précision de l'effort de serrage réel et présente l'avantage d'une part, de ne pas entraîner de frottement sous charge des pièces à serrer et donc d'éviter d'endommager les surfaces des pièces, et d'autre part, de ne pas générer de torsion dans le corps de la tige, réduisant ainsi le niveau de contrainte équivalente dans le corps de la tige et supprimant en outre les risques de desserrage intempestif en cas de vibration. Un tel procédé est très bien adapté au serrage de tout matériau, par exemple les aciers alliés utilisés habituellement en boulonnerie mais également les aciers inoxydables, le titane ou les matériaux composites qui sont très sensibles au frottement et au grippage et/ou à la torsion.

Une fois le serrage réalisé, il est cependant nécessaire de s'assurer que l'effort résiduel de tension de la tige, c'est-à-dire l'effort de précontrainte de la tige qui est appliqué sur la structure à assembler, est suffisant.

Une méthode de contrôle simple consiste à mesurer uniquement l'effort de traction ou d'extension appliqué à la tige par l'actionneur pour accoster l'écrou, et à extrapoler ensuite, en fonction de l'application particulière, la valeur de l'effort résiduel final de serrage obtenu après relâchement de l'effort d'extension. Cette extrapolation se fait en général au moyen d'un abaque ou à l'aide de données expérimentales. Néanmoins, une telle méthode de contrôle ne donne pas une précision satisfaisante pour bien des applications. Il est souvent nécessaire d'effectuer, avant le serrage sur site, des essais dans des conditions similaires à celle de l'application envisagée, ce qui est particulièrement coûteux. En outre, en raison de la faible précision, on se ménage en général une marge d'erreur, ce qui conduit généralement à prévoir des boulons surdimensionnés.

Une autre méthode peut être de déterminer l'allongement résiduel de la tige après relâchement. Pour ce faire, on mesure l'allongement résiduel de la tige avant et après serrage au moyen de dispositif de mesure de déplacement tel qu'un capteur à palpeur, par exemple un comparateur ou capteur inductif, ou un dispositif à ultrasons. Dans le cas du comparateur ou du capteur inductif, il est en général nécessaire d'avoir une pige de référence placée dans un passage axial usiné au centre de la tige de serrage générant ainsi des coûts d'usinage et de fabrication importants.

Le document FR-A-2 586 098 décrit un dispositif de contrôle d'allongement à la traction de goujon à l'aide d'une pige, comprenant un capteur à palpeur disposé sur les extrémités adjacentes d'une pige de référence et d'un goujon, les sorties des palpeurs étant reliées à une unité de traitement dans laquelle est introduite une valeur d'allongement et d'une pression de consigne à ne pas dépasser.

La mesure de la longueur de la tige de serrage peut être réalisée en variante, comme indiquée précédemment, à l'aide d'un capteur à ultrasons mesurant le temps mis pas une onde ultrasonore pour effectuer un ou plusieurs allers-retours entre les deux extrémités de la tige. Cette méthode nécessite l'utilisation d'un l'équipement de mesure par ultrasons qui généralement très onéreux.

Ces méthodes de contrôle présentent l'inconvénient de nécessiter un étalonnage préalable. L'étalonnage consiste à déterminer, pour chaque type de tiges d'une application déterminée, la correspondance entre l'allongement de la partie en serrage et l'effort de traction dans la tige. Ceci peut s'avérer particulièrement long et coûteux dans le cas d'applications utilisant un grand nombre de tige de serrage et où le haut niveau requis de précision impose un étalonnage de chaque tige qu'il faut ainsi référencer. Un exemple d'application est le serrage des cuves de réacteur nucléaire.

De plus, l'étalonnage doit être réalisé en laboratoire sur des machines de traction de grande précision dont la mise en oeuvre est coûteuse. En outre, il faut veiller à ce que les conditions d'étalonnage soient identiques ou similaires aux conditions de serrage dans l'application envisagée afin que l'étalonnage soit pertinent.

On notera encore que l'emploi de moyens de mesure sophistiqués, comme les capteurs ultrasonores ou les capteurs inductifs, augmente le coût de mise en oeuvre du procédé. Ceci est particulièrement vrai dans les applications où il y a une pluralité de tiges qui doivent être contrôlées simultanément.

Enfin, la correspondance entre l'allongement résiduel et l'effort de serrage étant définie, il reste encore à connaître, pour l'application, quel effort d'extension devra être appliqué pour permettre d'atteindre l'effort résiduel requis pour le serrage.

Un but de la présente invention est de proposer un procédé de contrôle de la mise sous tension d'une tige qui soit précis et fiable, qui puisse être mis en oeuvre facilement avec un coût faible, et qui ne nécessite aucun étalonnage préalable.

Dans un tel procédé de contrôle de la mise sous tension d'une tige, du type vis ou goujon, par extension axiale de la tige, et positionnement d'au moins un organe de retenue avant de relâcher la tige de sorte que cette dernière est bloquée aux deux extrémités de la longueur utile de serrage avec un effort résiduel de tension dans sa longueur de serrage, on effectue des mesures représentatives de l'allongement de la tige étirée sous un effort d'extension mesuré et de la tige après relâchement par rapport à la tige avant extension, c'est à dire à l'état repos en absence d'effort, en comparant des valeurs fournies par au moins un capteur lors de l'extension et après relâchement avec une valeur de référence fournie par ce capteur avant l'extension. Puis, on calcule à partir de ces données un effort résiduel de serrage dans la longueur utile de serrage de la tige.

La longueur de serrage est la longueur de la tige qui reste en traction lorsque la tige est relâchée en étant bloquée par le serrage. L'effort résiduel dans la longueur de serrage est l'effort effectif de serrage qu'il convient de prendre en compte pour une estimation précise de la précontrainte de serrage.

Un tel procédé de contrôle de la mise sous tension d'une tige ne nécessite pas d'étalonnage préalable des tiges, puisque les mesures réalisées sont des mesures relatives. Il n'est donc pas nécessaire de connaître la longueur initiale des tiges. On relève avant une étape d'extension une valeur de référence de la tige de serrage au repos fournie par le capteur, représentative de la longueur de la tige, mais sans nécessairement que cette valeur permette de déterminer directement la longueur de la tige. Ensuite, on relève la valeur fournie par ce capteur lorsque la tige est étirée et on la compare à la valeur de référence pour en déduire un allongement de la tige pendant l'extension. Après relâchement, on compare la valeur fournie par ce capteur à la valeur de référence pour en déduire un allongement de la tige après relâchement de serrage. On peut ainsi déterminer avec une bonne précision si la tige est correctement précontrainte après relâchement pour serrage.

Un effort d'extension appliqué sur la tige peut être estimé à partir de l'actionneur utilisé pour étirer la tige.

De préférence, on effectue des mesures relatives de l'allongement de la tige. Un tel procédé présente l'avantage de permettre de calculer l'effort résiduel de serrage avec une bonne précision.

Avantageusement, on effectue des mesures relatives de déplacement de l'extrémité supérieure de la tige. Avec un tel procédé, dans lequel on effectue des mesures relatives de déplacement de l'extrémité supérieure de la tige, on peut utiliser un comparateur ou un capteur inductif, les tiges de serrage peuvent alors être dépourvues de trou central et de pige de mesure.

Dans un mode de mise en oeuvre, on applique, à la tige, l'effort d'extension par un actionneur hydraulique et on calcule ledit effort d'extension à partir de la pression d'alimentation et de la surface sous pression de l'actionneur.

L'effort d'extension est ainsi le résultat de la multiplication de la pression par la surface du ou des pistons du vérin sur laquelle la pression est appliquée. Bien entendu, il est également possible que l'effort soit directement mesuré par un capteur d'effort. Toutefois, cette disposition entraîne un surcoût.

Avantageusement, on détermine l'effort résiduel dans la longueur de serrage de la tige relâchée comme une fonction, notamment une fonction linéaire, d'un effort d'extension, et d'un rallongement de ladite longueur utile de serrage de la tige à l'état étiré ou d'un déplacement de l'extrémité supérieure de la tige, et d'un allongement résiduel de ladite longueur de serrage de la tige une fois relâchée pour serrage. On peut ainsi calculer l'effort résiduel de serrage dans la longueur utile de serrage de la tige relâchée à partir de l'effort d'extension appliqué, multiplié par un allongement de la longueur de serrage de la tige relâchée, et divisé par un allongement de ladite longueur de serrage de la tige à l'état étiré.

Avantageusement, on déduit l'allongement de la longueur utile de serrage de la tige étirée à partir de l'effort d'extension et de l'allongement de la tige étirée.

Dans un mode de mise en oeuvre, on déduit l'allongement de la longueur utile de serrage de la tige étirée lors de la phase d'extension par l'actionneur comme l'allongement de la tige étirée auquel on soustrait une estimation de l'allongement d'une longueur supplémentaire libre prolongeant la longueur utile de serrage de la tige au-delà de la face d'appui d'un organe de retenue et une estimation de l'allongement d'une longueur de prise sur laquelle un organe de préhension vient en prise pour permettre l'extension de la tige par un actionneur.

Dans un mode de mise en oeuvre, on calcule l'allongement d'une longueur supplémentaire libre prolongeant la longueur utile de serrage de la tige au-delà d'une face d'appui d'un organe de retenue à partir de l'effort d'extension et de l'allongement de la tige étirée.

Dans un mode de mise en oeuvre, on calcule l'allongement d'une longueur de prise, sur laquelle un organe de préhension vient en prise pour étirer la tige, à partir de l'effort d'extension et de l'allongement de la tige étirée.

Avant l'étirage, la tige est, en général, initialement au repos. Toutefois, le présente invention peut être également appliquée à une tige de serrage déjà serrée, donc précontrainte. Par exemple, pour effectuer un contrôle après serrage de la tige, par exemple un contrôle périodique, ou pour modifier la précontrainte d'une tige après contrôle.

Dans un mode de mise en oeuvre dans lequel la tige est initialement précontrainte et bloquée par l'organe de retenue, on augmente progressivement un effort d'extension appliqué sur la tige en mesurant de façon relative l'allongement de la tige par rapport à la tige précontrainte avant extension en comparant la valeur fournie par le capteur avec la valeur initiale, on contrôle l'évolution de la relation effort d'extension/allongement jusqu'à détecter une rupture de pente indiquant que l'effort d'extension a dépassé la précontrainte initiale de la tige, puis on détermine, en fonction de l'évolution de la relation effort d'extension/allongement au-delà de ladite rupture de pente, une valeur de référence qui serait indiquée par le capteur pour la tige de serrage au repos, et on utilise cette nouvelle valeur comme valeur de référence pour les mesures relatives de l'allongement de la tige et le contrôle de la tension de la tige.

La présente invention concerne également un dispositif pour la mise en oeuvre d'un procédé de contrôle de tension d'une tige de serrage, comprenant un actionneur, un capteur d'effort, et un capteur d'allongement de la tige. Le dispositif comprend une unité de calcul pouvant recevoir un signal de sortie du capteur d'allongement et un signal de sortie du capteur d'effort, l'unité comprenant un module apte à calculer une donnée représentative de la longueur utile de serrage de la tige étirée et après relâchement en comparant des valeurs fournies par le capteur d'allongement lors de l'extension et après relâchement avec une valeur de référence fournie par ce capteur avant l'extension, le module étant en outre apte à déduire desdits calculs un effort résiduel de précontrainte ou de serrage dans une longueur utile de serrage de la tige. Ceci permet, notamment, de déterminer avec précision si la tige est correctement précontrainte après relâchement.

On entend ici par capteur d'allongement de la tige, un capteur apte à mesurer directement l'allongement de ladite tige ou à mesurer le déplacement de l'extrémité supérieure la tige.

Dans un mode de réalisation, l'unité comprend un module apte à calculer l'allongement de la tige.

L'unité peut comprendre un module apte à calculer le déplacement de l'extrémité supérieure de la tige.

Dans un mode de réalisation, le dispositif comprend une interface de saisie de paramètres de la tige et de l'actionneur, et des moyens mémoire pour stocker ces paramètres.

La présente invention et ses avantages seront mieux compris à l'étude de la description détaillée d'un mode de réalisation pris à titre d'exemple nullement limitatif et illustré par les figures annexées sur lesquelles :

- la figure 1 représente une vue schématique d'un dispositif de mise en précontrainte comprenant un actionneur vu en coupe et disposé à une extrémité filetée d'une tige de serrage;
- la figure 2 est une vue en coupe axiale schématique d'une tige filetée à ses deux extrémités, une extrémité étant vissée dans une première pièce et l'autre extrémité étant retenue par un écrou constituant l'organe de retenue; et
- la figure 3 est un graphique représentant des signaux de sortie d'un capteur d'allongement et d'un capteur d'effort lors de la mise en oeuvre d'un procédé de contrôle sur tige présentant une précontrainte initiale, selon un aspect de l'invention.

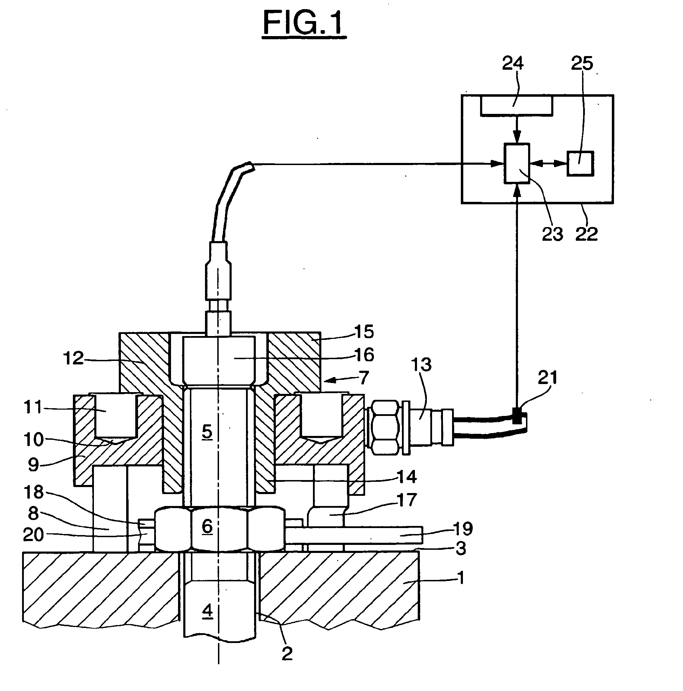

Sur la figure 1, une pièce à serrer 1 présente un passage 2 débouchant du côté d'une surface d'appui 3 de la pièce 1. La pièce 1 peut bien entendu comprendre un empilage de pièces à assembler. Une tige de serrage 4 est disposée dans le passage 2 et présente une extrémité filetée 5 faisant saillie du côté de la surface d'appui 3. Un écrou 6 est engagé sur l'extrémité filetée 5 jusqu'à venir en contact avec la surface d'appui 3.

Un dispositif de mise en tension de la tige et de contrôle comprend un actionneur référencé 7 dans son ensemble et disposé entre la pièce 1 et l'extrémité filetée 5 de la tige 4 pour exercer un effort axial d'extension de la tige 4.

L'actionneur 7, du type vérin hydraulique et de forme générale annulaire, est disposé autour de l'extrémité filetée 5 de la tige 4. L'actionneur 7 comprend une jupe de reprise d'effort 8, un cylindre 9 dans lequel est formée une chambre annulaire 10 fermée d'un côté par un piston 11 pouvant coulisser axialement relativement au cylindre 9, en entraînant un tirant de préhension 12. L'actionneur 7 comprend des moyens d'alimentation 13 pour amener un fluide sous pression dans là chambre 10. Le tirant 12 présente une portion axiale tubulaire 14 coulissant dans un passage central ménagé au centre du cylindre 9, la portion axiale 14 présentant un alésage fileté pouvant être vissé sur l'extrémité filetée 5 de la tige 4. Le tirant 12 présente en outre une couronne 15 en saillie radiale vers l'extérieur, sur une zone de plus grand diamètre sur laquelle le piston 11 peut agir.

Tel que représenté sur la figure 1, l'actionneur 7 est disposé de façon que la jupe de reprise d'effort 8 est en appui contre la surface d'appui 3 de la pièce 1, le cylindre 9 étant en appui sur la jupe 8 du côté opposé à la pièce 1, le piston 11 pouvant se déplacer du côté opposé à la pièce 1 en entraînant le tirant 12. Le tirant 12 est vissé sur l'extrémité filetée 5.

Un capteur 16 d'allongement est disposé à l'extrémité de la tige 4. Ce capteur 16 peut être, comme représenté ici, un capteur ultrasonore. On pourrait prévoir tout autre type de capteur apte à fournir un signal variant en fonction de l'allongement de la tige ou du déplacement du sommet de la tige, comme par exemple un capteur à palpeur, un comparateur ou un capteur inductif. Dans le cas d'une mesure d'allongement avec un capteur à palpeur, la tige doit être pourvue d'une pige de mesure placée dans un trou central. Il est également envisageable de remplacer le capteur 16 par un capteur (non représenté), par exemple une jauge, permettant de déterminer directement un effort d'extension et pouvant être situé axialement entre le piston 11 et le tirant 12, ou encore entre la jupe 8 et le cylindre 9.

Afin de pouvoir accoster l'écrou 6 manuellement lorsque la tige 4 est étirée, la jupe de reprise d'effort 8 est munie d'une ouverture 17. Des moyens de vissage de l'écrou 6 comprennent une bague 18 disposée autour de l'écrou et présentant une surface intérieure en correspondance de forme avec la surface extérieure de l'écrou 6 et un levier d'actionnement 19, passé à travers l'ouverture 17 et inséré dans des orifices 20 prévus sur le pourtour de la bague 18. Bien entendu, il est également envisageable de prévoir des moyens motorisés, pouvant être automatisés, pour réaliser le vissage de l'écrou 6 entraînant une configuration sensiblement différente de la jupe 8 pour permettre l'adaptation desdits moyens.

Pour introduire une précontrainte axiale dans la tige 4, on amène un fluide sous pression dans la chambre 10 du cylindre 9. Le cylindre 9 est retenu par la jupe d'effort 8 en appui contre la surface d'appui 3 de la pièce 1. Le fluide sous pression dans la chambre 10 développe sur le piston 11 un effort axial proportionnel à la pression du fluide et à l'aire de la projection de la surface du piston fermant la chambre 10 projetée dans un plan radial. Le piston 11 est sollicité axialement en déplacement du côté opposé à la surface d'appui en entraînant le tirant 12. Le tirant 12, engagé avec l'extrémité filetée 5 de la tige 4, transmet l'effort d'extension à la tige. Lorsque la tige est étirée, on utilise les moyens d'accostage 18 et 19 pour amener l'écrou 6 en contact avec la surface d'appui 3 de la pièce 1, en faisant tourner l'écrou 6 à l'aide du levier 19 et de la bague 18. Ensuite, on relâche l'effort d'extension exercé par l'actionneur 7. La tige 4 qui était préalablement étirée par l'actionneur 7, tend à se rétracter mais est retenue par l'écrou 6 en appui sur la pièce 1. Il en résulte qu'il subsiste un effort résiduel dans la tige 4 permettant de serrer la pièce 1.

Le dispositif de mise en tension et de contrôle comprend un second capteur 21 dont un signal est représentatif de l'effort appliqué par un actionneur 7. Le second capteur est ici prévu sous la forme d'un capteur de pression disposé sur les moyens d'alimentation 13 en fluide sous pression.

Les signaux des premier et second capteurs 16 et 21 sont transmis à une unité centrale 22, qui comprend un module de traitement 23 apte à calculer une valeur relative de l'allongement de la longueur de serrage de la tige 4 à l'état étiré, à enregistrer ou déterminer un effort de traction ou d'extension appliqué à la tige 4 en fonction d'un signal du second capteur 21 de pression, et à relever la valeur relative de l'allongement de la longueur de serrage de la tige après relâchement. Enfin, le module de traitement 23 est, en outre, apte à déduire desdits calculs, déterminations et relevés un effort résiduel de serrage dans une longueur utile de serrage de la tige 4, ceci permettant de déterminer avec précision si la tige 4 est correctement précontrainte après relâchement. Le dispositif comprend une interface de saisie 24 de paramètres de la tige 4, de l'écrou 6 et de l'actionneur 7, et des moyens mémoire 25 pour stocker ces paramètres.

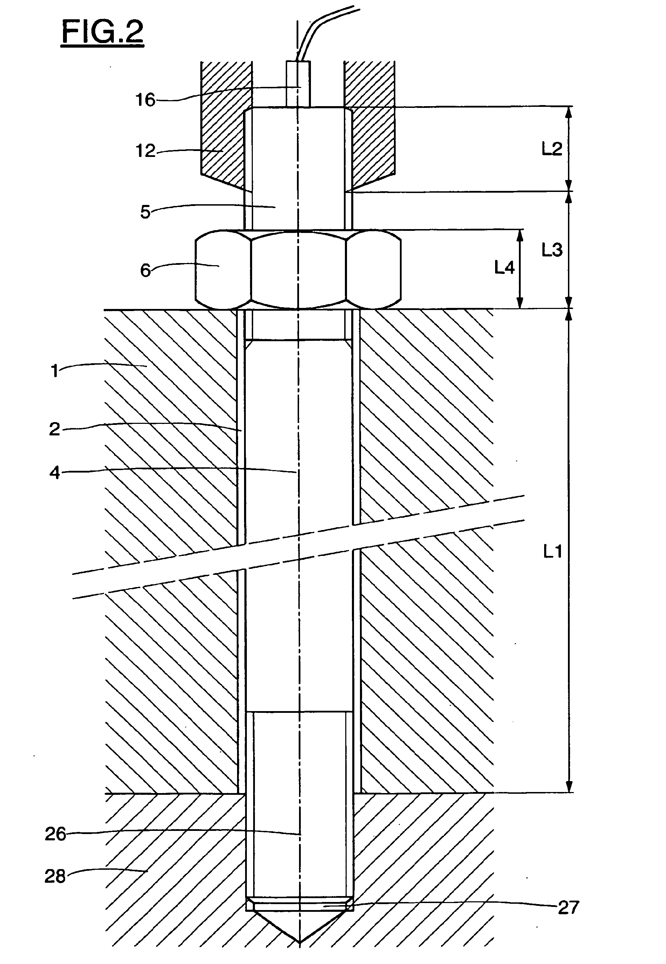

Sur la figure 2, la tige 4 comprend du côté opposé à la première extrémité filetée 5 une seconde extrémité filetée 26 faisant saillie du passage 2 de la pièce 1, et engagée dans un alésage fileté 27 correspondant prévu dans une seconde pièce 28 contre laquelle la première pièce 1 est appuyée côté opposé à la surface d'appui 3.

On peut distinguer plusieurs longueurs dans la tige 4, comme illustrée par les cotes L1, L2, L3 et L4 situées sur le côté de la tige 4. On entend ici par longueur dans la tige 4, des portions de la tige 4 présentant une longueur prédéterminée.

La longueur utile de serrage L1 se situe entre la seconde extrémité filetée vissée dans la pièce 28 et l'écrou 6 en position accostée contre la surface d'appui. La longueur utile L1 est la longueur dans laquelle subsiste l'effort résiduel de précontrainte ou serrage s'exerçant sur les pièces assemblées 1, 2. En d'autres termes, la longueur utile

Une première longueur de prise L2 est la longueur en prise avec le tirant de préhension 12. Une longueur supplémentaire libre L3 est la portion de la tige se situant entre la longueur utile L1, ou la face d'appui de l'écrou 6, et la première longueur de prise L2. Une seconde longueur de prise L4 est la portion de la première extrémité filetée engagée avec l'écrou 6.

Considérons ci-après des étapes de mise en précontrainte d'une tige de serrage initialement au repos, en reprenant les références numériques des figures 1 et 2.

La tige 4 étant au repos, le module de traitement 23 relève un signal ou une valeur de référence $V_I$ fournie par le capteur 16. Cette valeur de référence $V_I$ est relevée sans étalonnage préalable. Elle est représentative de la longueur de la tige, mais peut néanmoins présenter une erreur plus ou moins importante si on considère la longueur véritable de la tige.

Ensuite, l'actionneur 7 est commandé de façon à appliquer un effort d'extension ou traction à la tige 4 par l'intermédiaire du tirant 12 agissant sur la première extrémité 5 ou extrémité supérieure. La tige 4 ainsi étirée s'allonge. Le module de traitement 23 relève le signal du second capteur de pression 21 (figure 1) et en déduit l'effort d'extension $F_H$ appliqué sur la tige 4. Le module de traitement 23 relève simultanément la valeur d'allongement total $V_H$ fournie par le premier capteur 16.

Ensuite, après qu'un opérateur a accosté l'écrou 6 contre la surface d'appui, ou après un accostage motorisé, l'actionneur 7 est commandé de façon a relâcher la tige 4. La tige 4 bloquée par l'écrou 6 se contracte néanmoins partiellement. Le module de traitement 23 relève la valeur résiduelle $V_O$ fournie par le premier capteur 1 6.

A partir de ces données, et de données mémorisées relatives à la tige 4, à l'écrou 6 et à l'actionneur 7, en particulier le tirant 12, le module de traitement 23 détermine un effort résiduel de précontrainte de serrage de la longueur utile de serrage L1 de la tige 4.

Une valeur représentative de l'allongement $\Delta L_H$ de la tige 4 soumise à l'effort de traction est fournie par la différence entre la valeur de référence $V_I$ et la valeur totale $V_H$ fournies par le capteur 16 selon l'équation suivante :

$$\Delta L_H = V_H - V_I \qquad\qquad \text{Équation (1)}$$

Cet allongement total de la tige 4 soumise à la traction correspond principalement à la somme de l'allongement $\Delta L_U$ de la longueur utile L1, de l'allongement $\Delta L_S$ de la longueur supplémentaire libre L3 et de l'allongement $\Delta L_P$ de la première longueur en prise L2, selon l'équation suivante :

$$\Delta L_H = \Delta L_U + \Delta L_P + \Delta L_S \qquad\qquad \text{Équation (2)}$$

L'allongement $\Delta L_S$ de la longueur supplémentaire libre L3 peut être facilement déterminée avec un bon niveau de précision à partir de l'équation suivante :

$$\Delta L_S = \frac{F_H \cdot L_S}{A_S \cdot E} \qquad\qquad \text{Équation (3)}$$

où :

$F_H$ est l'effort d'extension exercé sur la tige par l'actionneur,
$L_S$ est la longueur de la longueur supplémentaire libre L3,
$A_S$ est une aire équivalente de la longueur supplémentaire libre tenant compte du filetage de cette dernière, et
E est le module d'Young en traction du matériau constituant la tige 4.

On peut également déterminer l'allongement de la longueur L2 en prise avec le tirant 12 à partir de l'équation suivante :

$$\Delta L_P = \frac{F_H \cdot K_I \cdot L_P}{A_P \cdot E} \qquad\qquad \text{Équation (4)}$$

où :

$F_H$ est l'effort d'extension exercé par l'actionneur,
$L_P$ est la longueur de la longueur L2 de la tige en prise avec le tirant 12,
$A_P$ est l'aire équivalente de la longueur en prise avec le tirant 12,
E est le module d'Young du matériau constituant la tige filetée 4 ; et
$K_I$ est un coefficient de correction lié à la forme du tirant 12.

Il est en effet nécessaire de prévoir un coefficient de correction $K_I$ car l'effort transmis par le tirant 12 à la première longueur de prise L2 est réparti le long de ladite longueur L2, et il en résulte que la déformation n'est pas uniforme. Il est ainsi évident que la déformation est plus importante dans une zone située du côté de la longueur utile L1, qui subit quasiment la totalité de l'effort appliqué, que du côté de l'extrémité libre de la tige 4 qui ne subit qu'une partie de l'effort appliqué. C'est pourquoi on détermine un effort moyen équivalent égal au produit de l'effort d'extension appliqué $F_H$ par le coefficient de correction $K_I$. Le coefficient de correction $K_I$ dépend de la géométrie de la tige 4, de celle du tirant 12, notamment sa hauteur, du profil de filetage, et éventuellement des matériaux constitutifs de ces éléments. Des coefficients de correction usuels peuvent être trouvés dans la littérature. La précision du calcul n'est pas altérée par l'utilisation d'une telle approximation.

En combinant les équations ci-dessus, le module de traitement 23 est apte à calculer avec une très bonne approximation l'allongement $\Delta L_U$ de la longueur utile de serrage L1, lorsque la tige 4 est soumise à l'effort d'extension. Le module de traitement 23 applique l'équation suivante :

$$\Delta L_U = \left(V_H - V_I\right) - \frac{F_H \cdot L_S}{A_S \cdot E} - \frac{F_H \cdot K_I \cdot L_P}{A_P \cdot E} \qquad \text{Équation (5)}$$

Ensuite, la tige 4 étant relâchée, l'allongement résiduel $\Delta L_R$ de la tige 4 est donné par la différence entre la valeur de référence $V_I$ et la nouvelle valeur $V_R$ donnée déterminée par le premier capteur 16, selon l'équation suivante :

$$\Delta L_R = V_R - V_I \qquad \text{Équation (6)}$$

Cet allongement $\Delta L_R$ correspond essentiellement à la somme de l'allongement résiduel $\Delta L_{UR}$ de la longueur utile L1 et de l'allongement résiduel $\Delta L_E$ de la seconde longueur de prise L4 qui est en prise avec l'écrou. La portion de la première extrémité filetée.5 de la tige 4 située au-delà de l'écrou 6 ne subit alors aucun effort de traction. En d'autres termes, ladite portion de la première extrémité filetée 5 correspond à la longueur de prise L2 et à la longueur supplémentaire L3 diminuée de la longueur de prise L4.

L'allongement résiduel $\Delta L_R$ peut donc être obtenu par l'équation suivante :

$$\Delta L_R = \Delta L_{UR} + \Delta L_E \qquad \text{Équation (7)}$$

Comme précédemment pour la première longueur de prise L2, l'allongement de la seconde longueur de prise L4 avec l'écrou peut être estimée à partir de l'équation suivante :

$$\Delta L_E = \frac{F_0 \cdot K_2 \cdot L_E}{A_E \cdot E} \qquad \text{Équation (8)}$$

où :

$F_O$ est l'effort résiduel de serrage dans la longueur utile de serrage de la tige 4,
$L_E$ est la longueur de la longueur en prise avec l'écrou 6,
$A_E$ est l'aire équivalente de la seconde longueur de prise L4;
E est le module d'Young du matériau constituant la tige filetée 4 ; et
$K_2$ est un coefficient de correction.

Le coefficient de correction K2 dépend de la géométrie de la tige 4, de celle l'écrou 6, notamment sa hauteur, du profil de filetage, et éventuellement des matériaux constitutifs de ces éléments. Des coefficients de correction usuels peuvent être trouvés dans la littérature.

Le module de traitement 23 peut donc calculer avec une très bonne approximation l'allongement résiduel $\Delta L_{UR}$ de la longueur utile de serrage L1 après relâchement de la tige à partir de l'équation suivante :

$$\Delta L_{UR} = \left(V_R - V_I\right) - \frac{F_0 \cdot K_2 \cdot L_E}{A_E \cdot E} \qquad \text{Équation (9)}$$

Ensuite, considérant que les déformations de la tige ont lieu dans le domaine élastique du matériau et que ces déformations sont ainsi proportionnelles à l'effort appliqué, le module de traitement 23 peut déterminer l'effort résiduel dans la longueur utile de serrage à partir de l'équation suivante :

$$\frac{F_H}{\Delta L_U} = \frac{F_O}{\Delta L_{UR}} \qquad\qquad \text{Équation (10)}$$

D'où on peut déduire l'équation finale suivante donnant $F_O$ l'effort résiduel de serrage recherché ou précontrainte :

$$F_O = F_H \cdot \frac{(V_R - V_I)}{\left(\Delta L_U + F_H \cdot \dfrac{K_2 \cdot L_E}{A_E \cdot E}\right)} \qquad\qquad \text{Équation (11)}$$

où toutes les variables ont été déterminées par les mesures des capteurs ou les équations précédentes, en particulier $\Delta L_U$ est donné par l'équation (5).

Dans l'exemple de la tige 4 illustrée sur les figures 1 et 2, la première extrémité filetée 5 présente un diamètre constant, de sorte que l'aire équivalente $A_P$ de la première longueur de prise L2 du tirant est égale à l'aire équivalente $A_S$ de la longueur supplémentaire L3 et à l'aire équivalent $A_E$ de la seconde longueur de prise L4 de l'écrou. Bien entendu, la tige 4 pourrait être différente et présenter des longueurs de diamètres différents séparés par exemple par des épaulements. Dans ce cas, les aires équivalentes seront différentes. En outre, si la longueur supplémentaire libre L3 présente différentes portions de diamètres différents, il sera dans ce cas nécessaire de distinguer chacune des aires équivalentes de ces portions dans le calcul de l'allongement de la longueur supplémentaire libre.

Par ailleurs, les équations précédentes ne tiennent pas compte de la déformation de la seconde extrémité filetée 26 de la tige 4, cette prise en compte n'étant pas nécessaire dans le procédé de contrôle selon la présente invention.

D'autres cas de figure sont envisageables, selon que la tige 4 est remplacée par une vis munie à sa seconde extrémité d'une tête monobloc, ou par un goujon retenu à ses deux extrémités par un écrou.

Les caractéristiques concernant la tige 4, l'écrou 6 et le tirant 12 de l'actionneur peuvent être rentrées dans les moyens-mémoire 25 avant le début du procédé de mise en tension de la tige 4. Il est nécessaire notamment de rentrer les valeurs suivantes : les différentes longueurs de la tige 4, les diamètres équivalents des longueurs, les coefficients de correction des longueurs en prise avec le tirant 12 et l'écrou 6 (ou les éléments pour les calculer), le module d'Young en traction du matériau de la tige.

Ces valeurs peuvent être rentrées pour chaque application. Une entrée de valeur sera valable pour toutes les tiges de serrage identiques d'une même application. On peut aussi prévoir que les moyens-mémoire 25 contiennent des jeux de valeurs courantes pour des applications courantes, un opérateur pouvant sélectionner parmi les valeurs préenregistrées celles qui correspondent à une structure à serrer et/ou à contrôler.

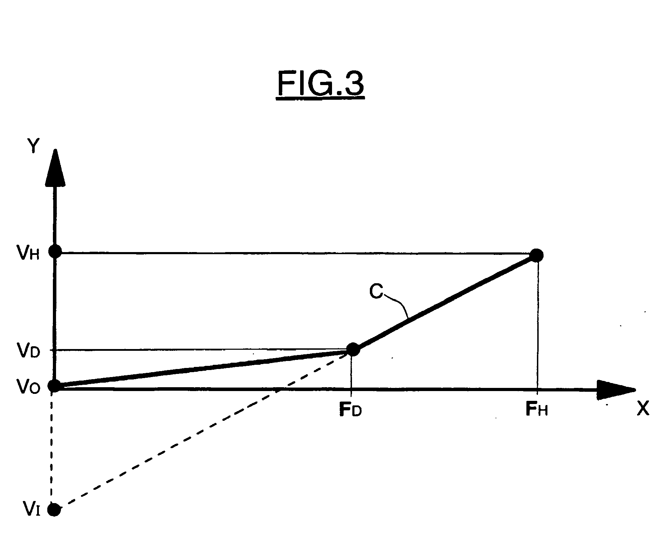

On a décrit ci-dessus un contrôle de mise en tension d'une tige initialement au repos. Le procédé de contrôle peut aussi être appliqué à une tige déjà précontrainte initialement, comme indiqué précédemment et expliqué ci-dessous, à l'aide de la figure 3, en reprenant les références utilisées pour les figures 1 et 2.

Cette dernière figure représente un graphique muni d'un axe des abscisses X sur lequel est reportée la valeur fournie par le second capteur indiquant l'effort appliqué sur la tige, et d'un axe des ordonnées Y sur lequel est reportée la valeur fournie par le premier capteur indiquant l'allongement de la tige.

Une courbe C, qui représente l'évolution de la relation entre l'allongement et l'effort de traction ou extension appliqué sur la tige déjà serrée, est continue linéaire par portions. La courbe C est d'abord linéaire sur un intervalle compris entre 0, correspondant à un effort nul de traction et à un allongement indiqué comme nul par le capteur, et une première valeur $F_L$, correspondant à un allongement $V_L$ indiqué par le capteur. Puis, après un net changement de pente, la courbe C est linéaire avec une pente plus importante sur un intervalle compris entre la valeur $F_L$ et une valeur finale $F_H$, correspondant à un allongement $V_H$ indiqué par le capteur.

On remarque bien la rupture de pente dans la courbe caractérisant la relation allongement/effort, lorsque l'effort de traction ou extension dépasse la première valeur $F_L$.

La précontrainte initiale de la tige n'est au départ pas connue. Dans une première étape, tant que l'effort appliqué ne dépasse pas la précontrainte initiale dans la longueur utile, la longueur utile de la tige ne s'allonge pas sous l'effet de l'effort de traction ou d'extension, l'écrou reste toujours accosté et seules les portions de la tige situées au-dessus de l'écrou s'allongent. Dans une seconde étape, lorsque l'effort appliqué dépasse la précontrainte initiale, l'écrou commence à décoller de la face et la tige dans son ensemble s'allonge, y compris la longueur utile.de serrage.

On comprend que la première portion de la courbe correspond à la première étape, et que la seconde portion, présentant une pente plus importante, correspond à la seconde étape.

Une fois atteinte la seconde étape, il est possible de déterminer par extrapolation la valeur $V_I$ qui serait indiquée par le premier capteur si la tige était relâchée de façon à revenir à sa position de repos, en prolongeant la seconde portion de la courbe vers les abscisses et les ordonnées négatives de façon à couper l'axe des ordonnées (comme représenté en pointillé sur la figure). Comme montré sur la figure, on détermine ainsi sur l'axe des ordonnées cette valeur $V_I$ correspondant à une abscisse d'effort appliqué nul.

En pratique, le module de traitement peut relever plusieurs points des deux portions de courbe, réaliser une régression linéaire de façon connue pour déterminer la pente et ainsi une équation linéaire qui donne une bonne approximation de ces deux portions, et déterminer par simple calcul la valeur $V_I$.

Connaissant maintenant la valeur initiale $V_I$, on est revenu dans les conditions d'application du procédé à une tige non précontrainte initialement, et on peut utiliser les équations (1) à (11) précédentes.

Bien entendu, un tel procédé permettant le serrage sous contrôle d'une tige au repos à l'état initial, ou permettant le contrôle et/ou le resserrage d'une tige déjà précontrainte, peut être mis en oeuvre par un dispositif qui enregistrera les données, recevra les entrées, assurera les calculs et générera les commandes appropriées pour le pilotage de l'actionneur et de l'accostage.

Grâce à l'invention, on obtient donc un procédé de contrôle de la mise en tension d'une tige de serrage qui est précis et qui peut être mise en oeuvre simplement, sans nécessiter d'étalonnage préalable.

## Revendications

1. Procédé de contrôle de la mise sous tension d'une tige (4), du type vis ou goujon, par extension axiale de ladite tige et positionnement d'au moins un organe de retenue (6) avant de relâcher la tige de sorte que cette dernière est bloquée aux deux extrémités de la longueur utile de serrage (L1) avec un effort résiduel de tension de serrage, **caractérisé en ce qu'**on effectue des mesures représentatives de l'allongement de la tige à l'état étiré ($\Delta L_H$) sous un effort d'extension mesuré ($F_H$) et de la tige après relâchement ($\Delta L_R$) par rapport à la tige avant extension en comparant des valeurs fournies par au moins un capteur lors de l'extension ($V_H$) et après relâchement ($V_O$) avec une valeur de référence ($V_I$) fournie par ce capteur avant l'extension, et on calcule, à partir de ces données, un effort résiduel de serrage ($F_O$) dans la longueur utile de serrage de la tige relâchée après extension.

2. Procédé selon la revendication 1, **caractérisé en ce qu'**on effectue des mesures relatives de déplacement de l'extrémité supérieure de la tige.

3. Procédé selon la revendication 1, **caractérisé en ce qu'**on effectue des mesures relatives de l'allongement de la tige.

4. Procédé selon l'une quelconque des revendications précédentes, **caractérisé en ce qu'**on applique, à la tige, l'effort d'extension ($F_H$) par un actionneur hydraulique et on calcule ledit effort d'extension à partir de la pression d'alimentation et de la surface sous pression de l'actionneur.

5. Procédé selon les revendications 3 ou 4, **caractérisé en ce qu'**on détermine l'effort résiduel de serrage ($F_O$) dans la longueur utile de serrage de la tige relâchée comme une fonction, notamment une fonction linéaire, d'un effort d'extension ($F_H$), et d'un allongement de la longueur utile de serrage de la tige étirée ($\Delta L_U$), et d'un allongement résiduel de la longueur utile de la tige relâchée ($\Delta L_{UR}$).

6. Procédé selon la revendication 5, **caractérisé en ce qu'**on calcule l'effort résiduel de serrage ($F_O$) dans la longueur utile de serrage de la tige relâchée à partir de l'effort d'extension appliqué ($F_H$), multiplié par un allongement de la longueur utile de serrage de la tige relâchée ($\Delta L_{UR}$), et divisé par un allongement de la longueur utile de serrage de la tige étirée ($\Delta L_U$).

7. Procédé selon l'une des revendications 5 ou 6, **caractérisé en ce qu'**on déduit l'allongement de la longueur utile de serrage de la tige étirée ($\Delta L_U$) à partir de l'effort d'extension ($F_H$) et de l'allongement de la tige étirée ($\Delta L_H$).

8. Procédé selon l'une des revendications précédentes 5 à 7, **caractérisé en ce qu'**on déduit l'allongement de la longueur utile de serrage de la tige étirée ($\Delta L_U$) comme l'allongement de la tige étirée ($\Delta L_H$) auquel on soustrait une estimation de l'allongement ($\Delta L_S$) d'une longueur supplémentaire libre (L3) prolongeant la longueur utile de serrage de la tige au-delà de la face d'appui d'un organe de retenue (6), et une estimation de l'allongement ($\Delta L_P$) d'une longueur de prise (L2) sur laquelle un organe de préhension (12) vient en prise pour l'extension de la tige par un actionneur (7).

9. Procédé selon l'une des revendications 5 à 8, **caractérisé en ce qu'**on calcule l'allongement ($\Delta L_S$) d'une longueur supplémentaire libre (L3) prolongeant la longueur utile de la tige au-delà d'une face d'appui d'un organe de retenue (6) à partir de l'effort d'extension ($F_H$) et de l'allongement de la tige étirée ($\Delta L_H$).

10. Procédé selon l'une des revendications 5 à 9, **caractérisé en ce qu'**on calcule l'allongement ($\Delta L_P$) d'une longueur de prise (L2), sur laquelle un organe de préhension (12) vient en prise pour étirer la tige, à partir de l'effort d'extension ($F_H$) et de l'allongement de la tige étirée ($\Delta L_H$).

11. Procédé selon l'une des revendications 3 à 10, **caractérisé en ce que**, la tige étant initialement précontrainte et bloquée par l'organe de retenue, on augmente progressivement un effort d'extension appliqué sur la tige en mesurant de façon relative l'allongement de la tige par rapport à la tige avant extension en comparant la valeur fournie par le capteur avec la valeur initiale avant extension, on contrôle l'évolution de la relation effort/allongement (courbe C) jusqu'à détecter une rupture de pente indiquant que l'effort d'extension a dépassé la précontrainte initiale de la tige, on détermine en fonction de l'évolution de la relation effort/allongement au-delà de ladite rupture de pente une valeur de référence qui serait indiquée par le capteur pour la tige au repos, et on utilise cette nouvelle valeur comme valeur de référence pour les mesures relatives de l'allongement de la tige et le contrôle de la tension de la tige.

12. Dispositif pour la mise en oeuvre d'un .procédé de contrôle de tension d'une tige de serrage, comprenant un actionneur, un capteur d'effort, et un capteur d'allongement de la tige, **caractérisé en ce qu'**il comprend une unité de calcul pouvant recevoir un signal de sortie du capteur d'allongement et un signal de sortie du capteur d'effort, l'unité comprenant un module apte à calculer une donnée représentative de l'allongement de la longueur utile de serrage de la tige à l'état étirée et après relâchement en comparant des valeurs fournies par le capteur d'allongement lors de l'extension et après relâchement avec une valeur de référence fournie par ce capteur pour la tige à l'état repos, le module étant en outre apte à déduire desdits calculs un effort résiduel de serrage ($F_O$) dans une longueur utile de serrage de la tige.

13. Dispositif selon la revendication 12, caractérisé en ce l'unité comprend un module apte à calculer l'allongement de la tige.

14. Dispositif selon la revendication 12, caractérisé en ce l'unité comprend un module apte à calculer le déplacement de l'extrémité supérieure de la tige.

15. Dispositif selon l'une quelconque des revendications 12 à 14, **caractérisé en ce qu'**il comprend une interface de saisie de paramètres de la tige et de l'actionneur, et des moyens mémoire pour stocker ces paramètres.


**Claims**

1. Method for controlling tensile stress of a rod (4), such as a screw or pin, by the axial extension of said rod and the positioning of at least one retaining member (6), before the rod is released, such that the latter is blocked at the two ends of the useful clamping length (L1) with a residual clamping tensile force, **characterized in that** measurements are made which represent the elongation of the rod in the stretched state ($\Delta L_H$) under a measured extension force ($F_H$) and of the rod after release ($\Delta L_R$) in relation to the rod before extension, by comparing values supplied by at least one sensor during extension ($V_H$) and after release ($V_O$) with a reference value ($V_I$) supplied by this sensor before extension, and, on the basis of these data, a residual clamping force ($F_O$) in the useful clamping length of the released rod after extension is calculated.

2. Method according to Claim 1, **characterized in that** relative measurements of the displacement of the upper end of the rod are carried out.

3. Method according to Claim 1, **characterized in that** relative measurements of the elongation of the rod are carried out.

**4.** Method according to any one of the preceding claims, **characterized in that** the extension force ($F_H$) is applied to the rod by means of a hydraulic actuator, and said extension force is calculated on the basis of the feed pressure and of the area under pressure of the actuator.

**5.** Method according to either one of Claims 3 and 4, **characterized in that** the residual clamping force ($F_O$) in the useful clamping length of the released rod is determined as a function, in particular a linear function, of an extension force ($F_H$), of an elongation of the useful clamping length of the stretched rod ($\Delta L_U$) and of a residual elongation of the useful length of the released rod ($\Delta L_{UR}$).

**6.** Method according to Claim 5, **characterized in that** the residual clamping force ($F_O$) in the useful clamping length of the released rod is calculated on the basis of the applied extension force ($F_H$) multiplied by an elongation of the useful clamping length of the released rod ($\Delta L_{UR}$) and divided by an elongation of the useful clamping length of the stretched rod ($\Delta L_U$).

**7.** Method according to either one of Claims 5 and 6, **characterized in that** the elongation of the useful clamping length of the stretched rod ($\Delta L_U$) is deduced from the extension force ($F_H$) and the elongation of the stretched rod ($\Delta L_H$).

**8.** Method according to one of the preceding Claims 5 to 7, **characterized in that** the elongation of the useful clamping length of the stretched rod ($\Delta L_U$) is deduced as the elongation of the stretched rod ($\Delta L_H$), from which are subtracted an estimation of the elongation ($\Delta L_S$) of an additional free length (L3) prolonging the useful clamping length of the rod beyond the bearing face of a retaining member (6) and an estimation of the elongation ($\Delta L_P$) of an engagement length (L2) on which a gripping member (12) comes into engagement for the extension of the rod by means of an actuator (7).

**9.** Method according to any one of Claims 5 to 8, **characterized in that** the elongation ($\Delta L_S$) of an additional free length (L3) prolonging the useful length of the rod beyond the bearing face of a retaining member (6) is calculated on the basis of the extension force ($F_H$) and of the elongation of the stretched rod ($\Delta L_H$).

**10.** Method according to any one of Claims 5 to 9, **characterized in that** the elongation ($\Delta L_P$) of an engagement length (L2) on which a gripping member (12) comes into engagement in order to stretch the rod is calculated on the basis of the extension force ($F_H$) and of the elongation of the stretched rod ($\Delta L_H$).

**11.** Method according to any one of Claims 3 to 10, **characterized in that**, with the rod being initially prestressed and blocked by the retaining member, an extension force applied to the rod is increased progressively, along with a relative measurement of the elongation of the rod in relation to the rod before extension, comparing the value supplied by the sensor with the initial value before extension, the change in the force/elongation relation (curve C) is controlled until a break in gradient indicating that the extension force has overshot the initial prestress of the rod is detected, a reference value which would be indicated by the sensor for the rod at rest is determined as a function of the change in the force/elongation relation beyond said break in gradient, and this new value is used as a reference value for the relative measurements of the elongation of the rod and for controlling the tension of the rod.

**12.** Device for carrying out a method for controlling the tension of a clamping rod, comprising an actuator, a force sensor and a rod elongation sensor, **characterized in that** it comprises a calculation unit capable of receiving an output signal from the elongation sensor and an output signal from the force sensor, the unit comprising a module capable of calculating a data item representing the elongation of the useful clamping length of the rod in a stretched state and after release, by comparing values supplied by the elongation sensor during extension and after release with a reference value supplied by this sensor for the rod in the state of rest, the module being capable, furthermore, of deducing from said calculations a residual clamping force ($F_O$) in a useful clamping length of the rod.

**13.** Device according to Claim 12, **characterized in that** the unit comprises a module capable of calculating the elongation of the rod.

**14.** Device according to Claim 12, **characterized in that** the unit comprises a module capable of calculating the displacement of the upper end of the rod.

**15.** Device according to any one of Claims 12 to 14, **characterized in that** it comprises an interface for the acquisition of parameters of the rod and of the actuator, and memory means for storing these parameters.

**Patentansprüche**

1. Verfahren zur Kontrolle des Spannens eines Schafts (4), von der Art Schraube oder Bolzen, durch axiale Dehnung des Schafts und Positionierung mindestens eines Halteorgans (6) vor dem Loslassen des Schafts, so dass letzterer an den beiden Enden der Nutzklemmlänge (L1) mit einer Restklemmspannungskraft blockiert wird, **dadurch gekennzeichnet, dass** repräsentative Messungen der Streckung des Schafts im gestreckten Zustand ($\Delta L_H$) unter einer gemessenen Dehnungskraft ($F_H$) und des Schafts nach dem Loslassen ($\Delta L_R$) bezüglich des Schafts vor der Dehnung durchgeführt werden, indem Werte, die von mindestens einem Sensor bei der Dehnung ($V_H$) und nach dem Loslassen ($V_O$) geliefert werden, mit einem Bezugswert ($V_1$) verglichen werden, der von diesem Sensor vor der Dehnung geliefert wird, und ausgehend von diesen Daten eine Restklemmkraft ($F_O$) in der Nutzklemmlänge des losgelassenen Schafts nach der Dehnung berechnet wird.

2. Verfahren nach Anspruch 1, **dadurch gekennzeichnet, dass** relative Verschiebungsmessungen des oberen Endes des Schafts durchgeführt werden.

3. Verfahren nach Anspruch 1, **dadurch gekennzeichnet, dass** relative Messungen der Streckung des Schafts durchgeführt werden.

4. Verfahren nach einem der vorhergehenden Ansprüche, **dadurch gekennzeichnet, dass** die Dehnungskraft ($E_H$) durch einen hydraulischen Antrieb auf den Schaft angewendet wird und die Dehnungskraft ausgehend vom Versorgungsdruck und von der unter Druck stehenden Fläche des Antriebs berechnet wird.

5. Verfahren nach den Ansprüchen 3 oder 4, **dadurch gekennzeichnet, dass** die Restklemmkraft ($F_O$) in der Nutzklemmlänge des losgelassenen Schafts als eine Funktion, insbesondere eine lineare Funktion, einer Dehnungskraft ($F_H$) und einer Streckung der Nutzklemmlänge des gestreckten Schafts ($\Delta L_U$) und einer Reststreckung der Nutzlänge des losgelassenen Schafts ($\Delta L_{UR}$) bestimmt wird.

6. Verfahren nach Anspruch 5, **dadurch gekennzeichnet, dass** die Restklemmkraft ($F_O$) in der Nutzklemmlänge des losgelassenen Schafts ausgehend von der angewendeten Dehnungskraft ($F_H$), multipliziert mit einer Streckung der Nutzklemmlänge des losgelassenen Schafts ($\Delta L_{UR}$) und dividiert durch eine Streckung der Nutzklemmlänge des gestreckten Schafts ($\Delta L_U$), berechnet wird.

7. Verfahren nach einem der Ansprüche 5 oder 6, **dadurch gekennzeichnet, dass** die Streckung der Nutzklemmlänge des gestreckten Schafts ($\Delta L_U$) ausgehend von der Dehnungskraft ($F_H$) und der Streckung des gestreckten Schafts ($\Delta L_H$) abgeleitet wird.

8. Verfahren nach einem der vorhergehenden Ansprüche 5 bis 7, **dadurch gekennzeichnet, dass** die Streckung der Nutzklemmlänge des gestreckten Schafts ($\Delta L_U$) als die Streckung des gestreckten Schafts ($\Delta L_H$) abgeleitet wird, von der eine Schätzung der Streckung ($\Delta L_S$) einer zusätzlichen freien Länge (L3), die die Nutzklemmlänge des Schafts über die Auflageseite eines Halteorgans (6) hinaus verlängert, und eine Schätzung der Streckung ($\Delta L_P$) einer Eingriffslänge (L2) subtrahiert wird, über die ein Greiforgan (12) zur Dehnung des Schafts durch einen Antrieb (7) in Eingriff kommt.

9. Verfahren nach einem der Ansprüche 5 bis 8, **dadurch gekennzeichnet, dass** die Streckung ($\Delta L_S$) einer zusätzlichen freien Länge (L3), die die Nutzlänge des Schafts über eine Auflageseite eines Halteorgans (6) hinaus verlängert, ausgehend von der Dehnungskraft ($F_H$) und der Streckung des gestreckten Schafts ($\Delta L_H$) berechnet wird.

10. Verfahren nach einem der Ansprüche 5 bis 9, **dadurch gekennzeichnet, dass** die Streckung ($\Delta L_P$) einer Eingriffslänge (L2), auf der ein Greiforgan (12) in Eingriff kommt, um den Schaft zu strecken, ausgehend von der Dehnungskraft ($F_H$) und der Streckung des gestreckten Schafts ($\Delta L_H$) berechnet wird.

11. Verfahren nach einem der Ansprüche 3 bis 10, **dadurch gekennzeichnet, dass**, da der Schaft anfangs vorgespannt und vom Halteorgan blockiert wird, eine an den Schaft angewendete Dehnungskraft progressiv erhöht wird, indem die Streckung des Schafts bezüglich des Schafts vor der Dehnung relativ gemessen wird, indem der vom Sensor gelieferte Wert mit dem Anfangswert vor der Dehnung verglichen wird, die Entwicklung der Beziehung Kraft/Streckung (Kurve C) kontrolliert wird, bis eine Steigungsunterbrechung erfasst wird, die anzeigt, dass die Dehnungskraft die Anfangsvorspannung des Schafts überschritten hat, abhängig von der Entwicklung der Beziehung Kraft/Streckung jenseits der Steigungsunterbrechung ein Bezugswert bestimmt wird, der vom Sensor für den Schaft im Ruhezustand angezeigt würde, und dieser neue Wert als Bezugswert für die relativen Messungen der Streckung des Schafts und die Kontrolle der Spannung des Schafts verwendet wird.

12. Vorrichtung zur Durchführung eines Verfahrens zur Spannungskontrolle eines Klemmschafts, die einen Antrieb, einen Kraftsensor und einen Streckungssensor des Schafts enthält, **dadurch gekennzeichnet, dass** sie eine Recheneinheit enthält, die ein Ausgangssignal des Streckungssensors und ein Ausgangssignal des Kraftsensors empfangen kann, wobei die Einheit ein Modul enthält, das einen repräsentativen Datenwert der Streckung der Nutzklemmlänge des Schafts im gestreckten Zustand und nach dem Loslassen berechnen kann, indem vom Streckungssensor bei der Dehnung und nach dem Loslassen gelieferte Werte mit einem von diesem Sensor für den Schaft im Ruhezustand gelieferten Wert verglichen werden, wobei das Modul außerdem von den Berechnungen eine Restklemmkraft ($F_O$) in einer Nutzklemmlänge des Schafts ableiten kann.

13. Vorrichtung nach Anspruch 12, **dadurch gekennzeichnet, dass** die Einheit ein Modul enthält, das die Streckung des Schafts berechnen kann.

14. Vorrichtung nach Anspruch 12, **dadurch gekennzeichnet, dass** die Einheit ein Modul enthält, das die Verschiebung des oberen Endes des Schafts berechnen kann.

15. Vorrichtung nach einem der Ansprüche 12 bis 14, **dadurch gekennzeichnet, dass** sie eine Schnittstelle zum Eingeben von Parametern des Schafts und des Antriebs und Speichereinrichtungen enthält, um diese Parameter zu speichern.

# FIG.1

# FIG.2

# FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2586098 A